(19) Europäisches Patentamt
European Patent Office
Office européen des brevets

(11) **EP 2 431 728 A2**

(12) **EUROPEAN PATENT APPLICATION**

(43) Date of publication:
**21.03.2012 Bulletin 2012/12**

(51) Int Cl.:
**G01N 19/00** (2006.01)

(21) Application number: **11181721.9**

(22) Date of filing: **16.09.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **16.09.2010 TW 099217943** | (71) Applicant: **Tsaur, Tung Yuan**<br>**Gaithersburg, MD 20878 (US)**<br><br>(72) Inventor: **Tsaur, Tung Yuan**<br>**Gaithersburg, MD 20878 (US)**<br><br>(74) Representative: **Viering, Jentschura & Partner**<br>**Kennedydamm 55/Roßstr.**<br>**40476 Düsseldorf (DE)** |

(54) **Apparatus for measuring peeling force of adhesives**

(57) Apparatus for measuring peeling force of an adhesive capable of varying different peeling angles and peeling rates, the apparatus comprising a force transducer for measuring a peeling force of a tape sample; and a peeling angle (angle C) defined by the adjustment a first angle (angle A) and a second angle (angle B); wherein said first angle (angle A) is defined by an angle between a test sled and a slide with a movement device, and said second angle (angle B) is defined by an angle between a force-bearing direction of said force transducer and a horizontal parallel plane of said slide.

FIG. 1

Printed by Jouve, 75001 PARIS (FR)

**Description**

BACKGROUND OF THE INVENTION

Field of the Invention

The present invention relates to an apparatus for measuring peeling force of an adhesive capable of varying different peeling angles and peeling rates, and a method for measuring characteristics of adhesives.

Description of Related Art

Adhesives are often used on medical, industrial, and daily life applications. Among the adhesives, pressure sensitive adhesives (PSAs) are broadly applied to the applications mentioned above, where also means that the PSA tapes is frequently used in many fields.

For products made from PSAs to become suitable for being used in different environments (which products may be applied at different altitudes, temperatures, humidity, and seasons), manufacturers must develop adhesives that have adequate characteristics. Currently, there are several standard testing procedures to evaluate the adhesion performance. All these standard testing procedures follow the sample testing under a constant temperature and humidity, and peeled under a fixed velocity and a fixed (90° or 180°) peeling angle to measure peeling forces of the sample adhesives (wherein the unit of the peeling force is weight unit such as gram, kilogram, newton or pound). Table 1 below lists conventional standard testing methods for reference.

Table 1

| Organization | Method | Peeling Angle | Testing Speed | Resident Time |
|---|---|---|---|---|
| ASTM[1] | D903 | 180 | 12 in/min | Open |
| ASTM | D1000 | 180 | 12 in/min | 20 min |
| ASTM | D2860 | 90 | Static | 3 min |
| ASTM | D3330 | 180 | 12 in/min | <1 min |
| TLMI[2] | L1A1 | 180 | 12 in/min | Open |
| PSTC[3] | 1 | 180 | 12 in/min | <1 min |
| PSTC | 2 | 90 | 12 in/min | <1 min |
| PSTC | 3 | 180 | 12 in/min | <1 min |
| PSTC | 14 | 90 | Static | 3 min |
| FINAT[4] | FTM1 | 180 | 300 mm/min | 20 min ~ 24 hour |
| FINAT | FTM2 | 90 | 300 mm/min | 20 min ~24hour |
| AFERA[5] | 4001 | 180 | 300 mm/min | 10 min |

[1]ASTM means "American Society for Testing and Materials";
[2] TLMI means "Tag & Label Manufacturers Institute";
[3] PSTC means "Pressure Sensitive Adhesive Council";
[4] FINAT means "Féderation Internationale des fabricants et transformateurs d'Adhésifs et Thermocollants";
[5]AFERA means "The European Association for the Self Adhesive Tape Industry".

However, when PSA products are used by the consumers, the PSA products' working environments are never under a constant temperature or humidity, and when PSA products are peeled from objects, PSA products likewise are never peeled under a fixed peeling rate or a given peeling angle (90° or 180°) by the consumers. Consequently, any PSA product's laboratory peeling simulation test result are not compatible with the real application. If one follows the current standard testing methods to develop and evaluate a PSA product, then the product will certainly fall short of its adaptability and performance in the real application.

Therefore, the development of a peel adhesion force testing apparatus which is capable of evaluating the peel adhesion force under different temperatures, angles, and velocities, is one of the most important issue to be endured.

SUMMARY OF THE INVENTION

Accordingly, the present invention is related to an apparatus for evaluating the peeling force of an adhesive at different peeling angle, peeling rate, and temperature conditions.

In one aspect, the invention provides an apparatus for measuring peeling force of an adhesive capable of varying different peeling angles and peeling rates. The apparatus comprises:

a force transducer for measuring a peeling force of a tape sample;
a peeling angle (angle C) defined by the adjustment a first angle (angle A) and a second angle (angle B);

wherein said first angle (angle A) is defined by an angle between a test sled and a plate on which the test sled is placed, and said second angle (angle B) is defined by an angle between a force-bearing direction of said force transducer and a horizontal parallel plane of said plate.

According to the invention, the peeling angle (angle C) satisfies the condition: $C° = 180° - (A° + B°)$, and $A° = B°$. The force transducer and said movement device is configured to maintain said peeling angle (angle C), said first angle (angle A) and said second angle (angle B) constant during operation.

In one example of the invention, the the test sled is on a plate. In one example of the invention, the plate is and a slide with a movement device.

In one embodiment of the present invention, the sample panel for carrying the adhesive tape may be a standard steel plate.

In one embodiment of the present invention, the apparatus for measuring peeling force of an adhesive may optionally include a temperature adjustable hot-cold plate for controlling the temperature. It locates on the test sled, below the sample panel. During the test, the tape sample is attached to the sample panel, and the test should be preformed until the hot-cold plate and the sample on the sample panel reach thermal equilibrium.

In one embodiment of the present invention, the apparatus for measuring the peeling force of an adhesive may optionally include a computer control system. The computer control system is used for experiment setup, data recording, and result evaluation and calculation. It can set up and record the sample temperature, movement rate and peeling rate, and peeling angles, including the angle A and the angle B, and the angle C ($C° = 180° - (A°+B°)$, where $A° = B°$). The peeling force data can be obtained by the calculation of the computer control system.

In one embodiment of the present invention, the apparatus for measuring peeling force of an adhesive may optionally include a light source that irradiates a laser beam at a peeling location on said test sled. A laser pointer can be used as the light source. By adjusting the first angle (angle A) and the second angle (angle B) to satisfy the condition: $A° = B°$). The peeling angle (angle C) can be determined by the equation: $C°=180° - (A° + B°)$. The light point may show the initial peeling point of the sample tape. The tape sample or label is peeled from the initial peeling point in the test.

In one embodiment of the present invention, the apparatus for measuring peeling force of an adhesive may optionally include protractors for the first and second angles. The first angle (angle A) may be adjusted by the first angle protractor, and the peeling angle (angle C) can be calculated by the equation: $C° = 180° - (A°+B°)$, and $A° = B°$. The second (angle B) may be adjusted by the second angle protractor, and the peeling angle (angle C) can also be calculated by the equation: $C° = 180° - (A°+B°)$, and $A° = B°$.

In one embodiment of the present invention, the apparatus for measuring peeling force of an adhesive comprises a test sled, a sample panel, a plate on a slide with a movement device, a force transducer, a mast, a first angle adjustment device, and a second angle adjustment device, and a hot-cold plate, whose temperature can be controlled. The sample panel carries a sample tape or label, and fits on top of the test sled. The test sled on the plate on a slide with a movement device may move with the movement device under a constant velocity on the slide, The force transducer locates on the mast. The first angle adjustment device locates on the test sled, and the first angle (angle A) is defined by an angle between test sled and the slide. The second angle adjustment device locates on the force transducer, and the second angle (angle B) is defined by an angle between a foprce-bearing direction of said force transducer and a horizontal parallel plane of said plate. The peeling angle (angle C) satisfies the condition: $C° =180° - (A°+B°)$, and $A° = B°$.

In another embodiment of the present invention, the apparatus for measuring peeling force of an adhesive comprises one test sled, one sample panel, one force transducer on a slide with a movement device, a mast, a first angle adjustment device, a second angle adjustment device, and a hot-cold plate, whose temperature can be controlled. The force transducer on a slide with a movement device may move with the movement device along the mast under a constant velocity on the slide. The force transducer locates on the mast.

According to the invention, a peeling angle (angle C) is defined by the adjustment a first angle (angle A) and a second angle (angle B), wherein the first angle (angle A) is an angle between the test sled and the plate, and the second angle (angle B) is defined by an angle between a force-bearing direction of said force transducer and a horizontal parallel plane of said plate. T peeling angle (angle C) satisfy the condition: $C = 180° - (A+B)$, and $A = B$. Then, the test sled or the force transducer moves with the movement device under a fixed velocity. The actual peeling rate can be calculated according to the peeling angle C and the movement velocity.

According to the invention, the peeling angle can be set by adjusting the first angle (angle A) and the second angle (angle B), and the peeling velocity can be adjusted through setting a velocity of the movement device, therefore a sample can be tested under different conditions, such as various peeling rates or angles. The peeling force of a tape sample can be evaluated under different conditions and then be recorded. Accordingly, it is possible to simulate a real world condition where the adhesive is actually used, through the apparatus for measuring peeling force of an adhesive..

A computer control system for experimental setup and analysis in working connection with said apparatus of the invention. The computer control system comprises a control module to setup a sample temperature, a movement velocity, a peeling velocity, said first angle, said second angle, and said third angle; a recording module for recording said setup parameters of said control module; an analyzing module for analyzing peeling force data; andan analyzing module for analyzing peeling force data; and a display module for displaying analyzed results of said analyzing module.

According to the invention, a method for measuring peeling force of an adhesive comprises:

performing a setup procedure for an apparatus configured for measuring peeling force of said adhesive;
wherein said setup procedure comprises initializing a first angle (angle A), a second angle (angle B), and a peeling angle (angle C);
adjusting said peeling angle with an irradiating light source after adjusting said first angle on a test sled and said second angle from a force transducer, wherein said first angle and said second angle are equal;
peeling a tape sample from said test sled under a peeling rate (Va) and moving said test sled horizontally on a slide under a movement velocity (Vb) away from said force transducer;

wherein said peeling rate further satisfies an operating condition:

$$Va = \frac{Vb}{\cos(A^o)} = \frac{Vb}{\cos(\frac{180^o - C^o}{2})}$$

BRIEF DESCRIPTION OF THE DRAWINGS

The foregoing summary, as well as the following detailed description of the invention, will be better understood when read in conjunction with the appended drawing. In the drawings:

FIG. 1 shows the side view of one embodiment of the apparatus for measuring peel force of an adhesive;

FIG. 2 shows the respective angles which are set when the peeling force of an adhesive is tested in the apparatus according to the present invention;

FIG. 3 shows the relationship among the first angle (angle A), the second angle (angle B), the peeling angle (angle C), the movement velocity (Vb), and the peeling rate (Va) in the apparatus according to the present invention;

FIG. 4 shows the relationship between the realistic peel rate and the peel angle under a constant 300 mm/min sled rate of the apparatus according to the invention, wherein the peel rate changes with angle despite the sled rate being constant.

FIG. 5 shows the sled rate used in the apparatus of the present invention at each testing parameter to ensure the peel rate remains at constant 300 mm/min rate.

DESCRIPTION OF THE EMBODIMENTS

As used herein, the article "a" or "an" means one or more than one (that is, at least one) of the grammatical object of the article, unless otherwise made clear in the specific use of the article in only a singular sense.

The present invention provides an apparatus for measuring peeling force of an adhesive capable of varying different peeling angles and peeling rates. The apparatus of the invention comprises a force transducer for measuring a peeling force of a tape sample and a peeling angle (angle C) defined by the adjustment a first angle (angle A) and a second angle (angle B); wherein said first angle (angle A) is defined by an angle between a test sled and a plate on which the test sled is placed, and said second angle (angle B) is defined by an angle between a force-bearing direction of said force transducer and a horizontal parallel plane of said plate.

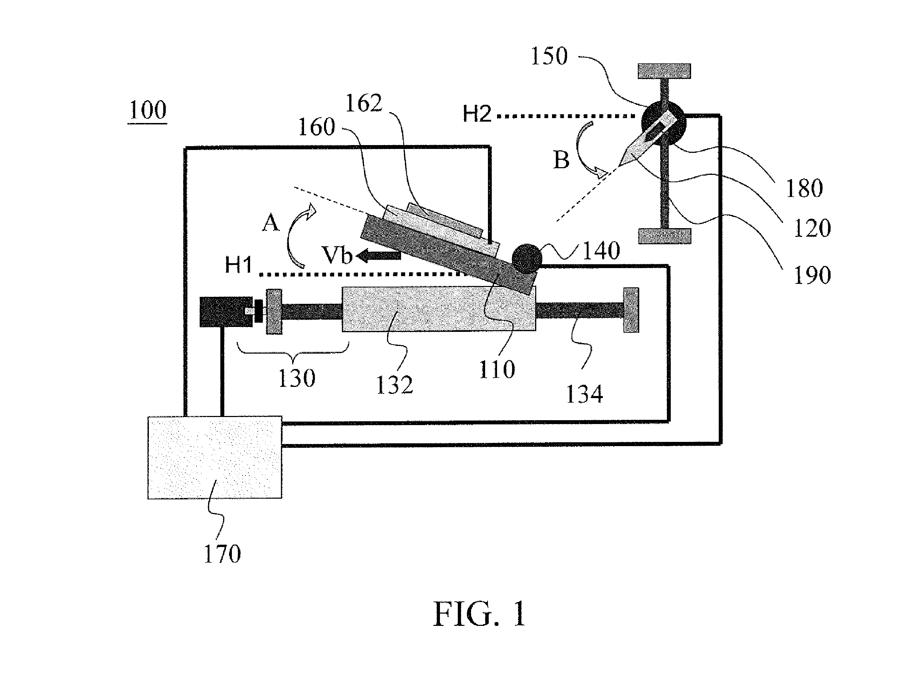

Referring to FIG. 1 showing the side view of the apparatus for measuring peeling force of an adhesive according to the present invention, the embodiment of the invention apparatus 100 comprises a slide 134 with sliding platform 132 installed, a test sled 110 where is set on the sliding platform 132 through a first angle adjustment device 140, a hot-cold plate 160 can be set between the test sled 110 and a sample panel 162, and a mast 190 with a force transducer 120 installed through a second angle adjustment device 150.

The sample panel 162 for carrying a tape sample or a label fits on top of the test sled 110. The test sled 110 on top of the sliding platform 132 moves with a movement device 130 under a constant velocity on the slide 134. The first angle adjustment device 140 adjusts the first angle A, in which the angle A is the angle between test sled 110 and the horizontal plane (H1) of the slide 134. The second angle adjustment device 150 adjusts the second angle B, in which the angle B is the angle between pointing direction of the force transducer 120 and the horizontal parallel plane H2 of the slide 134. The peeling angle (angle C) is defined by the first angle (angle A) and the second angle (angle B), and satisfies the condition: C° = 180° - (A°+B°), and A°=B°.

When the test sled 110 is not lifted up in the measuring apparaus (100), the horizontal plane H1 represents a plane which is orthogonal to the direction of gravity, the second horizontal parallel plane H2 is a plane which is parallel to H1 and the slide 134 and intercepts with the base of the force transducer 120 on the mast 190.

According to a preferred embodiment of the present invention, the movement device 130 is a continuously variable device could be consisted of a guide screw, a coupling, a servo-actuator and other components or any device capable of adjusting its velocity. Each of the first angle adjustment device 140 and the second angle adjustment device 150 may be a device for angle adjustment comprising a rotating shaft, a servo-actuator and other components, a stepper motor, a manually rotating shaft, or other suitable components.

According to a preferred embodiment of the present invention, the sample panel 162 may be a standard steel plate. As known to persons of ordinary skill in the art, standard steel plates have different degrees of surface roughness, e.g., 2 + 1 micron. The degree of surface roughness of the steel plate may affect the physical adhesion properties between the adhesive and an object to be adhered. Thus, the steel plates with scratches should be avoided. Furthermore, the surface cleanness of the steel plate will also affect the physical adhesion properties between the adhesive and an object to be adhered. Therefore, before using, the steel plates must be cleaned by lint-free cleaning papers, optionally with a solvent or a non-solvent.

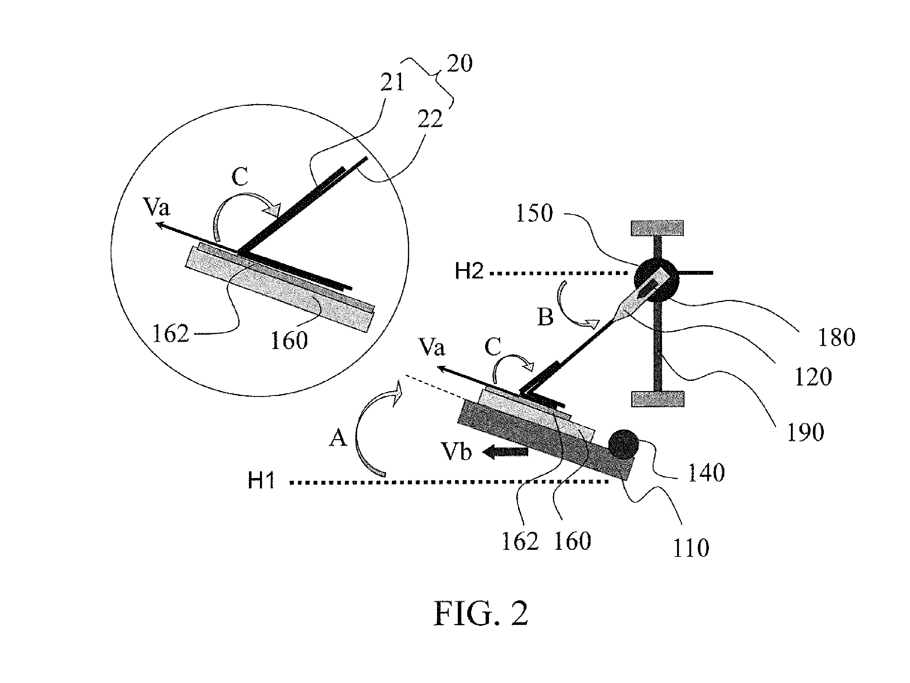

Referring to FIG. 2 showing the respective angles when the peeling force is measured with the apparatus according to the present invention, a tape sample 20 is prepared by laminating a layer of an adhesive 21 onto a backing layer 22 in order to evaluate the adhesive's performance. The backing layer 22 can be made of plastic (e.g. PET), paper, fabric, non woven, metal film. One end of the tape sample 20 is bound to the sample panel 162 (such as a steel plate). The sample panel 162 is secured by screws to the hot-cold plate 160, which is installed on top of the test sled 110. In addition, the hot-cold plate 160 is a device for controlling the temperature comprising a heating resistance wire, water cooled circulation pipelines and a temperature sensor element. By controlling the temperature of the hot-cold plate 160, the temperature among the hot-cold plate 160, the sample panel 162, and the sample tape 20 can reach a equilibrium. Consequently, the temperature among the hot-cold plate 160, the sample panel 162, and the sample tape 20 can be controlled and maintained.

In the magnified portion of FIG. 2, the tape sample 20 is bound to the sample panel 162 on one end; the sample panel 162 is secured on the test sled 110. The free end of the tape sample 20 is folded and secured to the clamp (not shown in the drawings) of force transducer 120.

Referring to FIG. 2, if a peeling angle C is determined, the user may adjust the angle A between the test sled 110 and the horizontal plane H1 of the slide 134 and the angle B between pointing direction of the force transducer 120 and the horizontal parallel plane H2 of the slide 134. The peeling angle (angle C) is defined by the first angle (angle A) and the second angle (angle B), which satisfies the condition: C°=180°-(A°+B°) (equation (I)), and A = B. In other words, A° = B° = (180°-C°) / 2 (equation (II)). For example, if a peeling angle (angle C) is 180°, then A° = B° = 0°; if a peeling angle (angle C) is 90°, then A° = B° = 45°; and if a peeling angle (angle C) is 130°, then A° = B° = 25°.

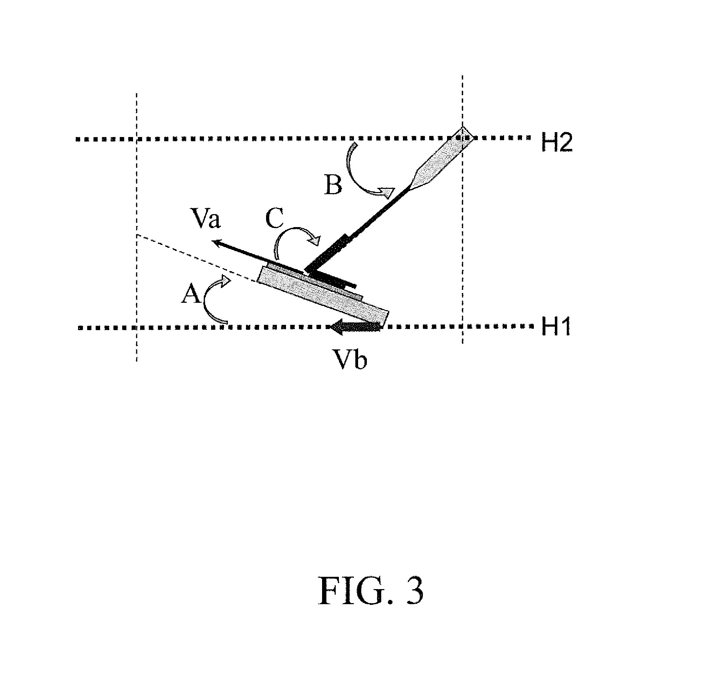

In one embodiment of the invention as shown in FIG. 2, when the test sled 110 starts to move away from the mast 190, the tape sample 20 will be peeled from the sample panel 162, resulting in the tension pulling the force transducer 120. As the test sled 110 moves under a constant velocity (Vb), the peeling force on the tape sample 20 continuously peels the adhesive layer 21 away from the sample panel 162 (such as a standard steel plate). The peeling angle (angle C) is defined by the first angle (angle A) and the second angle (angle B), and the movement velocity (Vb) and the peeling rate (Va) can be calculated. As shown in FIG. 3, the first angle (angle A) and the second angle (angle B), the peeling angle (angle C), the movement velocity (Vb), and the peeling rate (Va) are given according to a preferred embodiment in the present invention, and the peeling rate (Va) can be calculated by the following equation (III):

$$Va = \frac{Vb}{\cos(A)} = \frac{Vb}{\cos(\frac{180^0 - C}{2})}.$$

According to one embodiment of the present invention, an additional computer control system 170 can be included to the apparatus 100 in order to control the peeling angle (angle C) of the tape sample 20. The computer control system 170 is used for experiment setup, data recording, automatic controlling and/or result evaluation and calculation. It can set up and record the sample temperature, movement and peeling velocity, and peeling angle, The peeling force data can be calculated by the computer. All the above parameters can be adjusted manually.

The apparatus 100 may also include additional protractors (not shown in the drawings) for the first and second angles. The protractors also display the value of peeling angle (angle C) as calculated according to the equation mentioned above.

In one embodiment of the present invention, the apparatus 100 for measuring peeling force of an adhesive may comprise a light source. The light source irradiates a laser beam at a peeling location on said test sled 110, and the tape sample 20 can be peeled out following the light point. A laser pointer can be used as the light source.

According to the method for measuring the peeling force of an adhesive comprises the steps of measuring the peeling force of a tape sample at various conditions The first step comprises binding one end of the tape sample 20 to the sample panel 162 (such as a standard steel plate). Then, the sample panel 162 is secured by screws to the hot-cold plate 160, which is installed on top of the test sled 110. The free end of tape sample 20 is folded and secured to the clamp of force transducer 120. The sample tape 20, the sample panel 162, and the hot-cold plate 160 are kept for a few minutes until they reach thermal equilibrium. The second step comprises adjusting the first angle (angle A) between the test sled (110) and the horizontal line H1, and adjusting the second angle (angle B) between the force transducer (120) and the horizontal line H2 to set a peeling angle (angle C), where the first angle (angle A) and the second angle (angle B) satisfy the condition: C° = 180° - (A°+B°), and A° = B°. The third step comprises switching on the movement device to allow the test sled 110 to move forward under a constant velocity (Vb), and then the peeling rate (Va) of the adhesive layer 21 can be calculated by the equation (III). The last step comprises obtaining the peel adhesion force data of the tape sample 2.

In addition to the third step, the first or second step may be followed by a step to set up the temperature of the hot-cold plate 160. Furthermore, an additional step may be followed by the step to detect the initial peeling point of the tape sample 20 using the light source (such as a laser pointer).

To control the setup automatically, an additional step S70 of using the computer control system 170 may be added in the method according to the invention. The computer control system (170) provides the functions for setting up temperature, movement velocity, peeling velocity, the first angle A (angle A), the second angle (angle B). The the peeling angle (angle C) can be calculated by the equation: C°= 180° - (A°+B°), and A° = B°. The method according to the invention may comprise an additional step of recording data, displaying the result, and analyzing the peeling force data with the computer control system 170.

The method of the invention may start with the second step, and then be followed by the first, third and fourth steps. In another embodiment of the invention, the following steps may be added between either of the second, first and third steps wherever appropriate.

In one embodiment of the present invention, the slide and the mast is installed on a same base.

In conclusion, the present invention provides at least the following benefits:

(1) Using the apparatus of the present invention, different peeling angles can be set, the peeling rate can be varied (see FIG. 3). Optionally, the temperature of an adhesive may be changed using a hot-cold plate to give a temperature. Accordingly, it is possible to simulate the real world working conditions through the apparatus or method for measuring peeling force of an adhesive according to the invention.

(2) Based on the results obtained by the apparatus or method for measuring peeling force of an adhesive according to the present invention, PSA products that fit for the real world working conditions can be developed.

(3) It would be easy and possible to measure peeling force of an adhesive at various conditions according to the invention, including various temperatures, peeling angles, and peeling rates.

The efficacy of the present invention was experimented in the following example.

Example

*Materials and sample preparation*

A series of HMPSAs are made with the same formulation components in different ratios of solid/liquid tackifying resin (Table 2). Their formulation consist ExxonMobil Vector 4113 (a Styrene-Isoprene-Styrene Block Co-polymer), Yangzi Eastman C-100W (a solid hydrogenated hydrocarbon resin), Yangzi Eastman C-8010 (a liquid hydrogenated hydrocarbon resin), and Karamay KN-401 0 (a naphthenic oil). The series share the fixed formulation of 30% Vector 4113 and 10% KN-4010. HMPSA-1 has 60% solid tackifier. In these samples, HMPSA-2 had 45% solid and 15% liquid tackifier; HMPSA-3 had 30% solid tackifier and 30% liquid tackifier. The HMPSAs were coated on a Glassine release paper and transferred onto a 50 $\mu$ PET film with a uniform thickness of 20-21$\mu$ by a hot melt lab coater.

**Table 1**. Test Formulations

|  | Vector 4113 (%) | KN-4010 (%) | C-100W (%) | C-8010 (%) | Coating Thickness ($\mu$) |
|---|---|---|---|---|---|
| HMPSA-1 | 30 | 10 | 60 | 0 | 20 |
| HMPSA-2 | 30 | 10 | 45 | 15 | 21 |
| HMPSA-3 | 30 | 10 | 30 | 30 | 21 |

*Basic Characterization Tests*

The viscosity of the three HMPSA samples was evaluated at 160, 170, and 180°C by a viscometer accompanied with a Thermosel (ASTM 3236) respectively. Pressure sensitive adhesion performance, such as loop tack (PSTC-16), holding power (PSTC-107), and SAFT (ASTM D-4498-95) were examined based on their specific standard test methods. Rheometrics RDA2 (A strain controlled rheometer) was used to determine the rheological properties of tested samples at varied temperatures. In this experiment, the test condition used for rheological evaluation is as follow: 1) temperature scan: -20°C to +100°C; 2) tool or geometry: 8 mm parallel plate, 3) oscillatory frequency: 10 rad/sec., 4) sample thickness: 2.0-2.5 mm.

*Testing Equipment for Peel Adhesion*

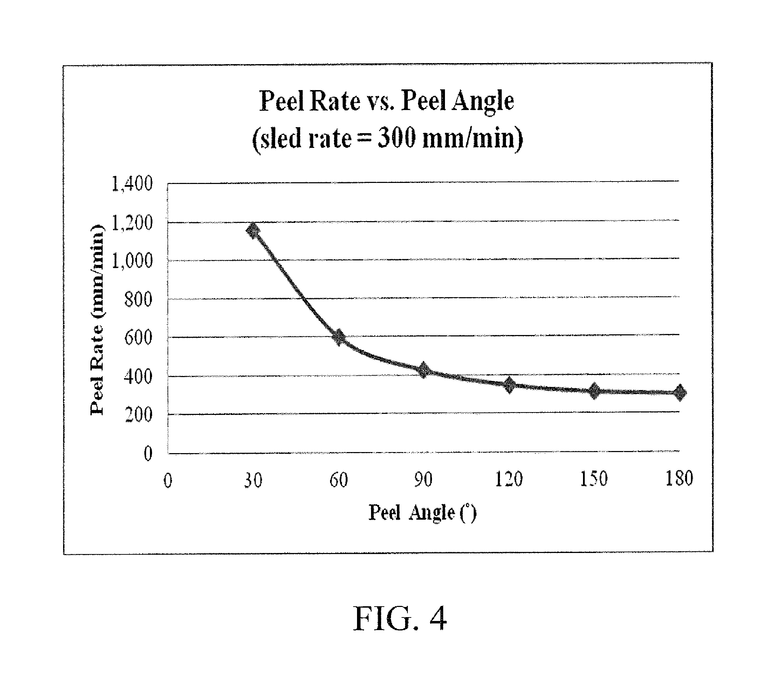

The apparatus of the invention was used to evaluate the peel force at various different peeling angles, peeling rates, and temperatures. The results of the experiment were shown in FIG 4. It was evidenced by the results of the example that independent parameters of peel rate from 15-300 cm/min, at angle from 0° to 180°, and temperature (by a hot-cold plate) from -20°C -80°C could be evaluated with the apparatus of the invention evaluated.

In this example, the angular effect on a PSA tape's performance was examined. The evaluation was conducted at a fixed peel rate but at different angles, as the peeling rate could more realistically relate to the adhproduct performance than the sled rate. The peeling rate was the actual rate of the tape being removed from its bonded surface, whereas the sled rate was only an instrumental parameter that did not directly simulate any real world application of the tape product.

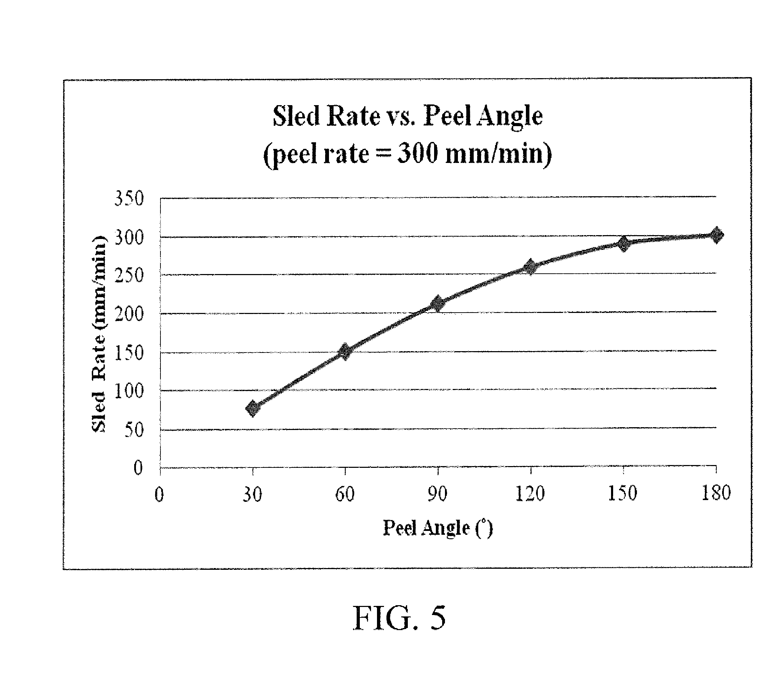

The apparatus of the invention can be programmed to evaluate peeling force at various conditions. Using the Equation (III), the sled rates and peel angles at a constant sled rate were plotted in FIG 5. It was demonstrated in FIG 5 that the peel rate remains constant at a costant sled rate using various peeling angles.

Although the present invention is illustrated by the above embodiments, these embodiments are not used to limit the present invention. It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

**Claims**

1. Apparatus for measuring peeling force of an adhesive capable of varying different peeling angles and peeling rates, the apparatus comprising:

   a force transducer for measuring a peeling force of a tape sample;
   a peeling angle (angle C) defined by the adjustment a first angle (angle A) and a second angle (angle B);

   wherein said first angle (angle A) is defined by an angle between a test sled and a plate on which the test sled is placed, and said second angle (angle B) is defined by an angle between a force-bearing direction of said force transducer and a horizontal parallel plane of said plate.

2. The apparatus of claim1, wherein said peeling angle (angle C) satisfies the condition:

$$C° = 180° - (A° + B°), \text{ and } A° = B°$$

3. The apparatus of claim 2, wherein said force transducer and said movement device is further configured to maintain said peeling angle (angle C), said first angle (angle A) and said second angle (angle B) constant during operation.

4. The apparatus of claim 1, further comprising a light source for irradiating a laser beam at a peeling location on said test sled.

5. The apparatus of claim 1, wherein said test sled further comprises a temperature adjustable hot-cold plate;

6. The apparatus of claim 1, further comprising a first angle adjustment device for adjusting said first angle and a second angle adjustment device for adjusting said second angle.

7. The apparatus of claim 6, wherein said peeling angle (angle C) is further defined by an angle defined between said light beam at said peeling location and said test sled.

8. The apparatus of claim 1, further comprising a pair of protractors, each protractor positioned for measuring said first angle and said second angle, respectively.

9. The apparatus of claim 1, wherein one end of said tape sample is tightly bonded to a sample panel secured on said test sled and the opposite end of said tape sample is folded and secured to said force transducer by a clamp.

10. The apparatus of claim 10, wherein said sample panel comprises a standard steel plate.

11. The apparatus of claim 2, wherein said movement device is configured for driving said test sled under a constant movement velocity (Vb) during operation.

12. The apparatus of claim 11, wherein during said operation, said tape sample is peeled at a peeling velocity (Va) relative to said movement velocity (Vb), satisfying the condition,

$$Va = \frac{Vb}{\cos(A^\circ)} = \frac{Vb}{\cos(\frac{180^\circ - C^\circ}{2})}$$

13. The apparatus of claim 12, wherein said first angle is equivalent to said second angle.

14. A computer control system for experimental setup and analysis in working connection with said apparatus of claim 1, the computer control system comprising:

a control module to setup a sample temperature, a movement velocity, a peeling velocity, said first angle, said second angle, and said third angle;
a recording module for recording said setup parameters of said control module;
an analyzing module for analyzing peeling force data; and,
a display module for displaying analyzed results of said analyzing module.

15. A method for measuring peeling force of an adhesive, the method comprising:

performing a setup procedure for an apparatus configured for measuring peeling force of said adhesive;

wherein said setup procedure comprises initializing a first angle (angle A), a second angle (angle B), and a peeling angle (angle C);
adjusting said peeling angle with an irradiating light source after adjusting said first angle on a test sled and said second angle from a force transducer, wherein said first angle and said second angle are equal;
peeling a tape sample from said test sled under a peeling rate (Va) and moving said test sled horizontally on a slide under a movement velocity (Vb) away from said force transducer;
wherein said peeling rate further satisfies an operating condition:

$$Va = \frac{Vb}{\cos(A^\circ)} = \frac{Vb}{\cos(\frac{180^\circ - C^\circ}{2})}$$

16. The method of claim 15, further comprising:

a hot-cold plate equipped on said test sled;
adjusting a temperature of said hot-cold plate to modify the temperature of said adhesive.

17. The method of claim 15, wherein said peeling angle (angle C) is defined by an angle between a force-bearing direction of said force transducer and said test sled and further satisfies the operating condition,

$$C = 180° - (A° + B°), \text{ wherein } A° = B°.$$

18. The method of claim 15, wherein said apparatus further comprises:

a control system for controlling sample temperature, movement velocity, peeling rate, first angle, second angle and peeling angle, and recording experimental data, analyzing said experimental data, and displaying analyzed results;

19. A method for measuring peeling force of an adhesive, the method comprising:

peeling a tape sample under a peeling rate (Va) from a test sled at a peeling angle (angle C) relative to said test sled;
moving said test sled horizontally on a slide under a movement velocity (Vb) away from a force transducer, wherein said test sled and said slide define a first angle (angle A);
adjusting a force-bearing direction of said force transducer relative to a horizontal plane parallel to said slide, wherein said force-bearing direction and said horizontal plane define a second angle (angle B);

20. The method of claim 19, wherein said peeling angle (angle C) is defined by an angle between said force-bearing direction and said test sled and further satisfies the operating condition,

$$C = 180° - (A° + B°), \text{ wherein } A° = B°.$$

21. The method of claim 19, further comprising:

adjusting a temperature of said hot-cold plate to modify the temperature of said adhesive.

22. The method of claim 19, further comprising:

maintaining all of said first angle, second angle, peeling angle, movement velocity and peeling rate constant during the peeling of said tape sample,.

23. The method of claim 19, wherein said test sled is driven by said movement device under constant movement velocity (Vb).

24. The method of claim 23, further comprising peeling said tape at a peeling velocity (Va) relative to said movement velocity (Vb), wherein the Va is calculated using the equation,

$$Va = \frac{Vb}{\cos(A°)} = \frac{Vb}{\cos(\frac{180° - C°}{2})}$$

FIG. 1

FIG. 2

FIG. 3

Peel Rate vs. Peel Angle
(sled rate = 300 mm/min)

Peel Angle (°)

Peel Rate (mm/min)

FIG. 4

FIG. 5

EP 2 431 728 A2